# EUROPÄISCHE PATENTSCHRIFT

(11) **EP 3 916 257 B1**
(45) Veröffentlichungstag und Bekanntmachung des Hinweises auf die Patenterteilung: **05.07.2023**
(21) Anmeldenummer: 21174999.9
(22) Anmeldetag: 20.05.2021
(51) Int. Cl.: F16C 19/52, F16C 39/00, F16C 41/02, F16C 41/00

(54) **OVALISIERUNGSBEGRENZUNGSVERFAHREN SOWIE STEUERUNGSVORRICHTUNG**
OVALISATION LIMITING METHOD AND CONTROL DEVICE
PROCÉDÉ DE LIMITATION D'OVALISATION, AINSI QUE DISPOSITIF DE COMMANDE

(30) Priorität: 26.05.2020 DE 102020206560
(43) Veröffentlichungstag der Anmeldung: 01.12.2021
(73) Patentinhaber: thyssenkrupp rothe erde Germany GmbH, 44137 Dortmund (DE); thyssenkrupp AG, 45143 Essen (DE)
(72) Erfinder: Möllenhoff, Julian, 59510 Lippetal-Lippborg (DE); Burtchen, Marco, 59555 Lippstadt (DE)
(74) Vertreter: thyssenkrupp Intellectual Property GmbH

(56) Entgegenhaltungen:
- EP-A2- 2 075 561
- DE-A1-102016 116 113
- DE-C1- 10 019 324
- US-A1- 2019 226 944

## Beschreibung

Die Erfindung betrifft ein Verfahren zur Begrenzung der Ovalisierung und/oder der überlagerten Verkippung eines eine Antriebseinheit lagernden Wälzlagers, mit mindestens zwei zueinander verdrehbar angeordneten Lagerringen, die mindestens eine Reihe von Wälzkörpern in einem Lagerinnenraum einschließen und die durch einen Ringspalt voneinander beabstandet sind, wobei die Antriebseinheit derart angeordnet ist, dass auf die Lagerringe wirkende Radialkräfte von einer der Antriebseinheit als Motorleistung zugeführten Antriebsleistung abhängig sind. Die Erfindung betrifft zudem eine Steuerungsvorrichtung zur Begrenzung der Ovalisierung eines eine Antriebseinheit lagernden Wälzlagers umfassend die Antriebseinheit, das die Antriebseinheit lagernde Wälzlager mit mindestens zwei zueinander verdrehbar angeordneten Lagerringen, die mindestens eine Reihe von Wälzkörpern in einem Lagerinnenraum einschließen und die durch einen Ringspalt voneinander beabstandet sind, wobei die Antriebseinheit derart angeordnet ist, dass auf die Lagerringe wirkende Radialkräfte von einer der Antriebseinheit als Motorleistung zugeführten Antriebsleistung abhängig sind, und eine Steuereinheit zur Steuerung der Antriebsleistung.

Krane und Tunnelbohrmaschinen sind beispielhafte Anwendungen, bei denen Wälzlager eine Antriebseinheit lagern wobei auf die Lagerringe wirkende Radialkräfte von einer der Antriebseinheit zugeführten Antriebsleistung abhängig sind. Ein besonders prominentes Beispiel solcher Anwendungen ist der sogenannte Ruderpropeller, der sich insbesondere durch ein hohes Maß an Manövrierfähigkeit bei geringen Geschwindigkeiten - daher sehr beliebt bei Fähren und Schleppern - auszeichnet. Ein solcher, beispielsweise aus DE 10 2015 212 500 A1 bekannter Ruderpropeller, zeichnet sich dadurch aus, dass Antrieb und Steuerung in einer Baueinheit kombiniert sind. Ein klassisches Ruder wird durch diese Technologie entbehrlich gemacht, da der Ruderpropeller aufgrund seiner azimutalen Lagerung horizontal um 360° verschwenkt werden kann; somit eine direkte Steuerungswirkung - auch ohne das Umströmen eines Ruders - entfaltet. Für den Antrieb des Ruderpropellers wird die vom Antriebsmotor ausgeübte Kraft über eine Kupplung und eine Gelenkwelle in einem Oberwassergetriebe senkrecht nach unten umgelenkt und über eine Verbindungswelle zum Unterwassergetriebe weitergeleitet. Anschließend wird der Kraftfluss erneut um 90° umgelenkt und auf die waagerecht liegende Propellerwelle übertragen, die den horizontal um 360° verschwenkbaren Ruderpropeller antreibt.

Aus US 2019/0226944 A1 ist ein Verfahren und eine Steuerung zum Vorhersagen einer verbleibenden nutzbaren Lebensdauer eines Rotorwellenlagers einer elektrischen Propellergondel bekannt. Die Vorhersage der verbleibenden Lebensdauer des Lagers basiert auf Merkmalen, die aus Vibrationssignalen und/oder Ölanalyseergebnissen extrahiert werden.

Die azimutale Lagerung solcher Ruderpropeller ist technologisch herausfordernd, da sichergestellt werden muss, dass ein Eintritt von Wasser in das Azimutlager des Ruderpropellers sowie ein Austritt von Schmiermittel aus dem Azimutlager vermieden werden kann. Hierzu wird das Azimutlager mit Dichtringen ausgestattet.

Nicht unproblematisch sind jedoch die hohen Belastungen, die bei bestimmten Fahrmanövern auftreten und zum sogenannten Ovalisieren der Lagerringe führen können, wenn aufgrund des Abstandes zwischen dem im Betrieb eine Kraft ausübenden Propeller und dem Azimutlager hohe Momente auf die Lagerringe wirken. Hierdurch wird ein unerwünschtes Risiko dafür geschaffen, dass der Abstand zwischen Innen- und Außenring zu groß und infolgedessen das Lagersystem undicht wird, so dass unerwünschter Weise Schmiermittel aus dem Lager austreten und Wasser in das Lager hinein eindringen kann. Dieses kann zu aufwändigen Reparaturen und Ausfällen führen. Neben der Ovalisierung der Lagerringe, bei der die Verformung über die Höhe der Lagerringe konstant ist, kann es ferner zu einer ebenfalls Undichtigkeiten verursachenden unerwünschten überlagerten Verkippung, bei der die Verformung über die Höhe der Lagerringe nicht konstant ist, kommen. Eine solche radiale Verkippung tritt insbesondere dann auf, wenn der Außenring eines Großwälzlagers nur auf einer Seite aufliegend auf die Anschlusskonstruktion verschraubt wird oder wenn eine etwaige Asymmetrie des Ringquerschnitts in Bezug auf die Schnittebene senkrecht zur Drehachse des Lagers vorliegt.

Nicht zuletzt deswegen kommen für Ruderpropeller- aber auch für Kranbeziehungsweise Tunnelbohrmaschinenanwendungen regelmäßig sehr massiv konstruierte Doppelvierpunktlager oder dreireihige Rollenlager zum Einsatz, was zusätzlichen Material- und Herstellungsaufwand verursacht.

Aus DE 10 2016 116 113 A1 ist ein Wälzlager mit wenigstens einem ersten und einem zweiten berührungslos messenden Sensor bekannt, wobei der erste Sensor einer umlaufenden Referenzkante und der zweite Sensor einer Referenzfläche gegenüberliegend angeordnet ist und der erste Sensor zur Messung eines Überdeckungsgrades der Sensorfläche mit der Referenzkante und der zweite Sensor zur Messung eines radialen Abstands zur Referenzfläche vorgesehen ist. Dabei ist einer Unterscheidung zwischen belastungsinduzierten Verformungen und Verschleiß möglich.

EP 2 075 561 A2 sind Verfahren und Vorrichtungen zur Fehlerreduzierung bei Rotorbelastungsmessungen in Windkraftanlagen bekannt.

Ausgehend von dem vorbeschriebenen Stand der Technik liegt der Erfindung daher die Aufgabe zugrunde, ein Verfahren vorzuschlagen, das es erlaubt, die Lager eines eine Antriebseinheit lagernden Wälzlagers weniger massiv auszuführen und gleichzeitig das Risiko unerwünschten Schmiermittelaus- beziehungsweise etwaigen Wassereintritts im Betrieb wirksam zu vermeiden.

Gelöst wird diese Aufgabe erfindungsgemäß durch ein eingangs genanntes gattungsgemäßes Verfahren, mit den folgenden Schritten:
- Ermittlung einer im Betrieb der Antriebseinheit auftretenden Radialverformung des Ringspaltes zwischen den Lagerringen mittels mindestens zweier Abstandssensoren,
- Vergleichen der ermittelten Radialverformung mit einem vorgebbaren Grenzwert in einer Auswerteeinheit und
- Reduzieren der der Antriebseinheit zugeführten Motorleistung mittels einer mit den Abstandssensoren verbundenen Steuereinheit der Antriebseinheit, wenn die Radialverformung den vorgebbaren Grenzwert übersteigt.

Bei einem solchen Verfahren wird in einem ersten Schritt die im Betrieb auftretende Radialverformung zwischen den Lagerringen ermittelt. Diese Ermittlung erfolgt dabei mit Hilfe von Abstandssensoren, die sich im Betrieb des Wälzlagers verändernde Abstände beziehungsweise die daraus resultierende Radialverformung schnell und präzise zwischen den beiden Lagerringen erfassen können. Solche Abstandssensoren können beispielsweise magnetisch, insbesondere nach dem Prinzip der Wirbelstromprüfung, arbeiten, um Abstandsänderungen zwischen den beiden Lagerringen zu detektieren. Dabei wird durch eine Sendespule ein wechselndes Magnetfeld in mindestens einem Lagerring erzeugt, welches durch eine Empfängerspule zur Abstandsbestimmung beziehungsweise Radialverformung detektiert wird.

Nachdem die Radialverformung, also die Änderung der umfänglich versetzt zueinander gemessenen Abstände in radiale Richtung der Lagerringe, ermittelt worden ist, wird der ermittelte Wert in einem zweiten Schritt an eine an die Abstandssensoren angeschlossene Auswerteeinheit übergeben. Dabei ist diese Auswerteeinheit dazu ausgelegt, den aktuellen Wert für die Radialverformung mit einem vorgebbaren Grenzwert zu vergleichen. Der Vergleich der Radialverformung mit dem Grenzwert kann zu zwei Ergebnissen führen: Entweder liegt die ermittelte Radialverformung unterhalb des Grenzwertes oder nicht.

In Abhängigkeit von der ermittelten Radialverformung in Bezug auf den Grenzwert, wird in einem dritten Schritt des erfindungsgemäßen Verfahrens die der Antriebseinheit zugeführten Motorleistung mittels einer mit den Abstandssensoren verbundenen Steuereinheit der Antriebseinheit reduziert, wenn die Radialverformung den vorgebbaren Grenzwert übersteigt. Für eine Radialverformung unterhalb des Grenzwertes wird ein solches, die Motorleistung beeinflussendes, Signal von der Auswerteeinheit an die Steuereinheit nicht abgesetzt.

Durch dieses erfindungsgemäße Verfahren wird es auf intelligente Art und Weise ermöglicht, die Belastung auf die Lagerringe und die damit einhergehenden Auswirkungen auf die Lebensdauer nicht nur zu erfassen, sondern auch wirksam zu begrenzen. Dieses führt vorteilhafterweise dazu, dass Undichtigkeiten des Lagersystems, was beispielsweise für den Fall, dass die Antriebseinheit ein Ruderpropeller eines Wasserfahrzeugs ist, vermieden werden können. Gleichzeitig besteht ein großer Vorteil des erfindungsgemäßen Verfahrens darin, dass es erlaubt, die Lagerringe deutlich einfacher und mit weniger Materialeinsatz herzustellen, da eine Auslegung für übermäßige Belastungen durch das Vorsehen der erfindungsgemäßen Begrenzung der Motorleistung entbehrlich wird.

In einer bevorzugten Weiterbildung des erfindungsgemäßen Verfahrens wird bei einer Überschreitung des Grenzwertes der Radialverformung das Signal zur Reduktion der Motorleistung an die Steuereinheit erst abgesetzt, wenn vorher eine manuelle Bestätigung durch den Bediener des angetriebenen Wälzlagers vorgenommen worden ist, um zu vermeiden, dass ein, beispielsweise aus Sicherheitsgründen, dringend notwendiges Steuerungsmanöver nicht ausgeführt wird, also sichergestellt wird, dass der Bediener des angetriebenen Wälzlagers jederzeit noch die Steuerungshoheit innehat.

Besonders bevorzugt wird bei einem Ausbleiben der Bestätigung durch den Bediener des angetriebenen Wälzlagers innerhalb einer vordefinierten Zeitspanne das Signal zur Reduktion der Motorleistung automatisch abgesetzt, so dass bei einer etwaigen Unachtsamkeit des Bedieners eine übermäßige Ovalisierung und/oder überlagerte Verkippung der Lagerringe effektiv vermieden werden kann.

Gemäß einer weiteren Ausführungsform der Erfindung wird bei einer Überschreitung des Grenzwertes das Signal zur Reduktion der Motorleistung an die Steuereinheit erst abgesetzt, wenn vorher durch einen Wassersensor ein Wassereintritt in das Lagersystem detektiert worden ist. Ein solcher Wassersensor ist dazu ausgelegt, selbst kleinste Mengen Wasser zu detektieren, die in das Lagersystem eindringen können. Bei dieser Ausführungsform des erfindungsgemäßen Verfahrens wird somit in zwei aufeinanderfolgenden Schritten geprüft, ob eine Reduktion der Motorleistung aus Gründen der Überbelastung oder der konkreten bereits eingetretenen Undichtigkeit erfolgen soll. Nur wenn eine Grenzwertüberschreitung der Radialverformung vorliegt und ein Eindringen von Wasser detektiert wird, wird die Motorleistung reduziert. Insofern erlaubt diese Weiterbildung des erfindungsgemäßen Verfahrens eine höhere Ovalisierung der Lagerringe, wobei höhere Lagerbelastungen bis zur durch die Ovalisierung bedingten Undichtigkeit des Lagers toleriert werden. Insofern stellt diese Weiterbildung eine besonders intelligente Belastungssteuerung des Wälzlagers dar, die im Grundbetrieb übermäßige Lagerbelastungen vermeidet, ein schlankes Lagerdesign ermöglicht und gleichzeitig die bezüglich der Lagerdichtigkeit maximal tolerierbare Belastung der Lager im Bedarfsfall erlaubt.

Besonders vorteilhaft ist es, wenn das erfindungsgemäße Verfahren in Echtzeit, also mit wenigen ms Zeitverzögerung, durchgeführt wird, da hierdurch nahezu unverzüglich gegengesteuert werden kann, wenn eine zu hohe Ovalisierung der Lagerringe vorliegt. Hierdurch kann ein möglicher Schaden des Wälzlagers entweder vermieden beziehungsweise deutlich verringert werden. Die Durchführung in Echtzeit wird insofern ermöglicht, als dass das erfindungsgemäße Verfahren durch den bloßen Vergleich eines ermittelten Radialverformungswertes mit einem nutzerseitig hinterlegten Grenzwert lediglich ein Minimum an Prozessor- und Datenübertragungsgeschwindigkeit benötigt wird.

Besonders präzise wird die Ermittlung der Radialverformung, wenn vier bezüglich des Mittelpunktes der Lagerringe um 90° umfänglich versetzt zueinander angeordnete Abstandssensoren verwendet werden, da in einem solchen Fall über die gesamte Ellipse mit maximal voneinander beabstandeten Punkten und nicht lediglich an einem Punkt gemessen wird. Wenn übereinander angeordneter Abstandssensoren eingesetzt werden, kann auch eine zusätzlich zur Ovalisierung auftretende überlagerte Verkippung erfasst werden.

Vorteilhafterweise wird die Festlegung des Grenzwertes der Radialverformung auf Basis einer Finite-Elemente-Methoden(FEM)-Berechnung mit Blick auf das Dichtungsfedern des Lagers ermittelt, um die auftretenden Verformungstoleranzen unter Berücksichtigung der mechanischen Eigenschaften der Lagerkomponenten und der Dichtungselemente optimal zu bestimmen. Ebenso kann die Grenzwertermittlung der Radialverformung praktischerweise auch im Rahmen eines Versuchsaufbaus im Miniaturmaßstab durchgeführt werden.

Die besonderen Vorteile des erfindungsgemäßen Verfahrens treten insbesondere für den Anwendungsfall ein, wenn die Antriebseinheit ein Ruderpropeller eines Wasserfahrzeugs darstellt - wenn also ein hohes Maß an Dichtigkeit eingehalten werden muss.

In einer besonders vorteilhaften Ausgestaltung des erfindungsgemäßen Verfahrens erfolgt die Kommunikation zwischen der Auswerteeinheit, der Steuereinheit, der Antriebseinheit und der Sensorik vollständig oder teilweise kabellos. Hierdurch entfällt nicht nur ein sonst erforderlicher Verkabelungsaufwand, sondern wird zudem das Risiko von Wackelkontakten der Anschlusskabel minimiert, die durch während des Fahrbetriebes stattfindenden Vibrationen durchaus auftreten können.

Ferner betrifft die vorliegende Erfindung eine gattungsgemäße Steuerungsvorrichtung zur Begrenzung der Ovalisierung und/oder einer überlagerten Verkippung eines eine Antriebseinheit lagernden Wälzlagers. Dabei zeichnet sich die Steuerungsvorrichtung dadurch aus, dass die Steuerungsvorrichtung mindestens zwei mit einer Steuereinheit verbundene Abstandssensoren zur Ermittlung einer Radialverformung des Ringspaltes und eine an die Steuereinheit und die Abstandssensoren angeschlossene Auswerteeinheit zum Vergleichen der ermittelten Radialverformung mit einem vorgebbaren Grenzwert umfasst und die Steuereinheit dazu ausgebildet ist, die Motorleistung zu reduzieren, wenn die Radialverformung des Ringspalts den Grenzwert übersteigt. Durch eine solche Steuerungsvorrichtung kann das vorbeschriebene Verfahren durchgeführt werden.

Besonders bevorzugt weist bei dieser Steuerungsvorrichtung das Wälzlager einen Durchmesser auf, der größer ist als 50 cm, da die Ovalisierung der Lagerringe bei großen Wälzlagern besonders problematisch ist.

In einer Weiterbildung dieser Steuerungsvorrichtung ist die Antriebseinheit ein Ruderpropeller eines Wasserfahrzeugs, da die erfindungsgemäßen Vorteile hinsichtlich der Dichtigkeit des Lagersystems hierbei besonders zur Geltung kommen.

In einer besonders bevorzugten Weiterbildung dieser Steuerungsvorrichtung weist jeder Abstandsensor eine Sender- und Empfängerspule auf, wobei die Messung der Radialverformung auf Grundlage der Wirbelstromprüfung erfolgt. Dieses erlaubt es nicht nur, eine präzise und schnelle Messung der Ovalisierung der Lagerringe vorzunehmen, sondern zeichnet sich insbesondere durch ein hohes Maß an Fehlerunempfindlichkeit aus, da nichtmetallische Substanzen keinen verfälschenden Einfluss auf das Messergebnis nehmen.

Vorteilhafte Weiterbildungen ergeben sich aus den Unteransprüchen, der nachfolgenden Beschreibung sowie den Figuren.

Nachfolgend ist die Erfindung anhand von Ausführungsbeispielen unter Bezugnahme auf die beigefügten Figuren beschrieben. Es zeigen:
Fig. 1: Eine Darstellung zweier Lagerringe eines eine Antriebseinheit lagernden Wälzlagers im unbelasteten Zustand (links) und im Zustand einer Ovalisierung (rechts),
Fig. 2: eine schematische Darstellung der Verfahrensschritte des erfindungsgemäßen Verfahrens,
Fig. 3: eine schematische Darstellung der Verfahrensschritte des erfindungsgemäßen Verfahrens mit manueller Bestätigung durch den Bediener des Wälzlagers,
Fig. 4: eine schematische Darstellung der Verfahrensschritte des erfindungsgemäßen Verfahrens mit Wassersensor zur Detektion eines Wassereintritts und
Fig. 5: eine schematische Darstellung der erfindungsgemäßen Steuervorrichtung.

In den verschiedenen Figuren sind gleiche Teile stets mit den gleichen Bezugszeichen versehen und werden daher in der Regel auch jeweils nur einmal benannt beziehungsweise erwähnt.

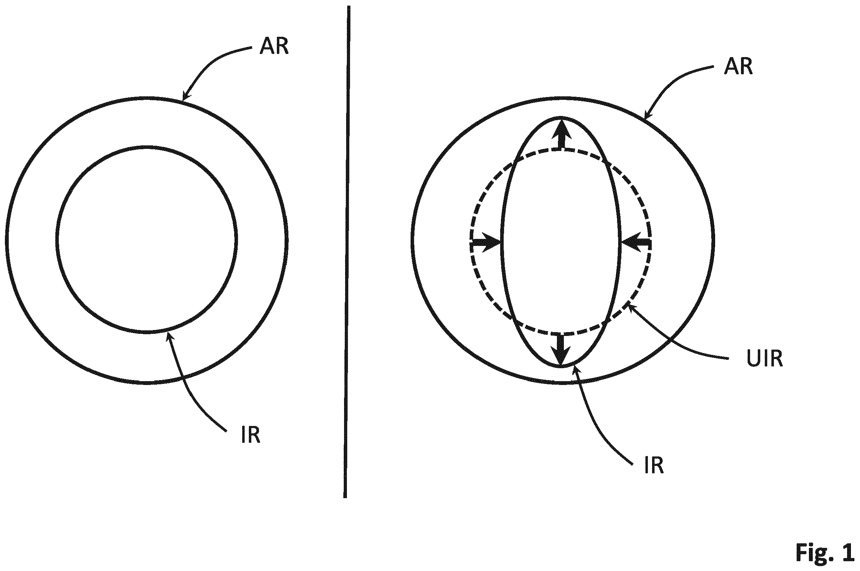

In Fig. 1 sind zur Visualisierung der beispielsweise im Rahmen des Betriebes von Ruderpropellern auftretenden Ovalisierung zwei Lagerringe, Innenring IR respektive Außenring AR, dargestellt, die im unbelasteten Zustand kreisförmig sind; mithin schlichtweg keine Ovalisierung vorhanden ist (links). Ein solcher Zustand, bei dem keine beziehungsweise keine nennenswerte Radialverformung auftritt, stellt sich regelmäßig ein, wenn die Belastung auf die Lagerringe gering ist beziehungsweise die Lagerringe sehr massiv und aufwändig als Doppelvierpunktlager beziehungsweise dreireihiges Rollenlager konstruiert worden sind. Im Gegensatz dazu ist in Fig. 1 (rechts) der Zustand bei starker Belastung schematisch gezeigt, wie er sich beispielsweise bei gewissen Fahrmanövern in Folge der Hebelwirkung des Propellers auf die Ebene der Lagerringe IR, AR auftreten kann. Bezüglich der ursprünglichen Form des Innenrings UIR ist der Innenring IR nunmehr erkennbar ovalisiert. Die Ovalisierung ist mit vier Pfeilen zur Verdeutlichung hervorgehoben worden. Eine übermäßige Ovalisierung ist aus Gründen des potentiellen Schmiermittelaustrittsaus- respektive des Wassereintritts in das Lager sowie einer hieraus resultierenden Absenkung der Lebensdauer und Beeinträchtigung der Lagereigenschaften unerwünscht.

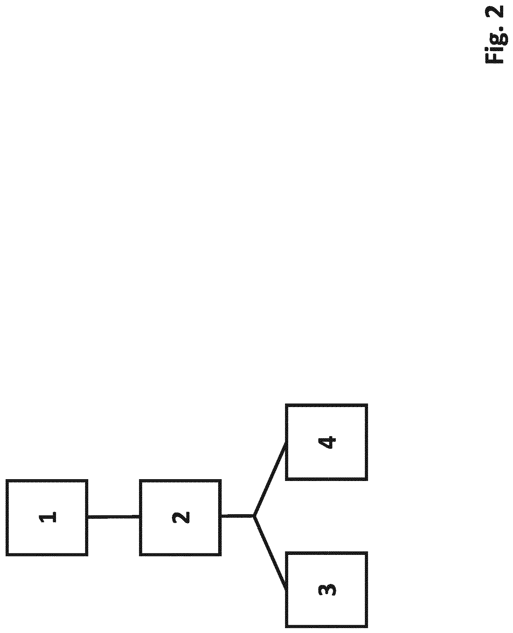

Eine in Fig. 2 dargestellte Ausführungsform des erfindungsgemäßen Verfahrens zeigt schematisch die essentiellen Verfahrensschritte zur Begrenzung der Ovalisierung. Zuerst wird durch Abstandssensoren die im Betrieb des Ruderpropellers auftretende Radialverformung zwischen den Lagerringen IR, AR ermittelt 1, um anschließend an eine die Antriebseinheit M steuernde Steuereinheit C angeschlossene Auswerteeinheit A übergeben zu werden. Durch eine einfache und daher schnell durchführbare Vergleichsoperation wird durch die Auswerteeinheit A festgestellt, ob die Radialverformung unterhalb eines nutzerseitig voreingestellten Grenzwertes liegt 2. Falls die ermittelte aktuelle Radialverformung nicht unterhalb des Grenzwertes liegt, wird durch die Auswerteeinheit ein Signal zur Reduktion der Motorleistung an die Steuerungseinheit absetzt 3. Andernfalls wird kein derartiges Signal abgesetzt 4. Somit wird erforderlichenfalls die aktuell im Fahrbetrieb auftretende Ovalisierung erfasst und auf ein tolerierbares Höchstmaß begrenzt.

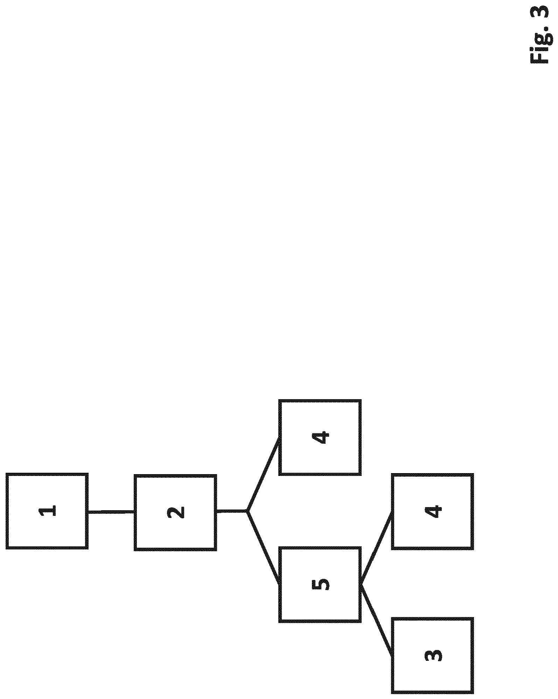

Die in Fig. 3 dargestellte Ausführungsform des erfindungsgemäßen Verfahrens zeichnet sich dadurch aus, dass bei einer Überschreitung des Grenzwertes der Radialverformung das Signal zur Reduktion der Motorleistung an die Steuerungseinheit 3 erst abgesetzt wird, wenn zuvor eine manuelle Bestätigungsanfrage 5 durch den Bediener des angetriebenen Wälzlagers, beispielsweise eines Wasserfahrzeugs, vorgenommen worden ist. Insofern handelt es sich bei dieser Bestätigung um eine Genehmigung der Leistungsreduzierung der Antriebseinheit M durch den Bediener des angetriebenen Wälzlagers, so dass dieser immer die Steuerungshoheit innehat. Es sind durchaus Situationen denkbar, wo die Lager durchaus stärker belastet - vielleicht auch irreversibel - werden müssen, um beispielsweise schwerere Schäden zu vermeiden. In einem solchen Fall können bestimmte Manöver - was allerdings eine Ausnahme darstellen sollte - zu Ungunsten der Haltbarkeit des Lagersystems aus Sicherheitsgründen dennoch durchgeführt werden. So bleibt die optimale Manövrierfähigkeit im Bedarfsfall erhalten, wobei unnötige, beispielsweise durch Unachtsamkeit des Bedieners des angetriebenen Wälzlagers bedingte Lagerbelastungen wirksam vermieden werden können.

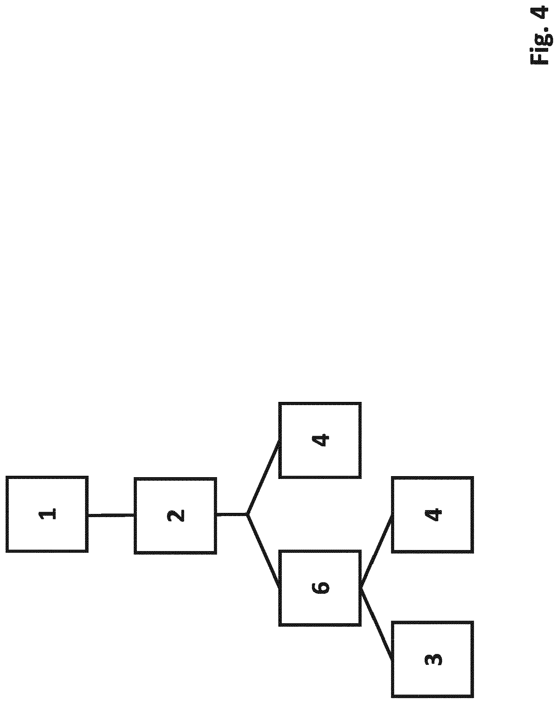

Als besonders bevorzugte Weiterbildung des erfindungsgemäßen Verfahrens ist in Fig. 4 eine Ausführungsform schematisch dargestellt, bei der ein Signal zur Reduktion der Motorleistung 3 in Folge einer zu hohen Radialverformung erst dann abgesetzt wird, wenn vorher durch einen Wassersensor ein Wassereintritt in das Lager detektiert worden ist 6. Dabei ist ein solcher Wassersensor insbesondere in der Lage, sehr geringe Mengen von in dem Lagersystem eindringenden Wassers zu erfassen und dieses Detektionsergebnis unverzüglich über die Auswerteeinheit an die Steuerungseinheit zur Regelung der Motorleistung weiterzugeben. Durch diese Vorschaltung des Wassersensors, kann ein eigentlich für die Haltbarkeit der Lager ungünstiges Fahrmanöver beziehungsweise ein Wassereintritt temporär gestattet werden, und zwar so lange, bis durch die Ovalisierung bedingte Undichtigkeiten auftreten oder ein aus Sicherheitsgründen dringend erforderliches Fahrmanöver abgeschlossen ist. Hierdurch kann ein angetriebenes Wälzlager, beispielsweise ein Ruderpropeller, an seiner Dichtigkeitsgrenze beziehungsweise nur so kurz wie möglich darüber hinaus betrieben werden, um ein zur Gefahrenvermeidung erforderliches Fahrmanöver mit maximal zulässiger Motorleistung in möglichst geringer Zeit absolvieren zu können.

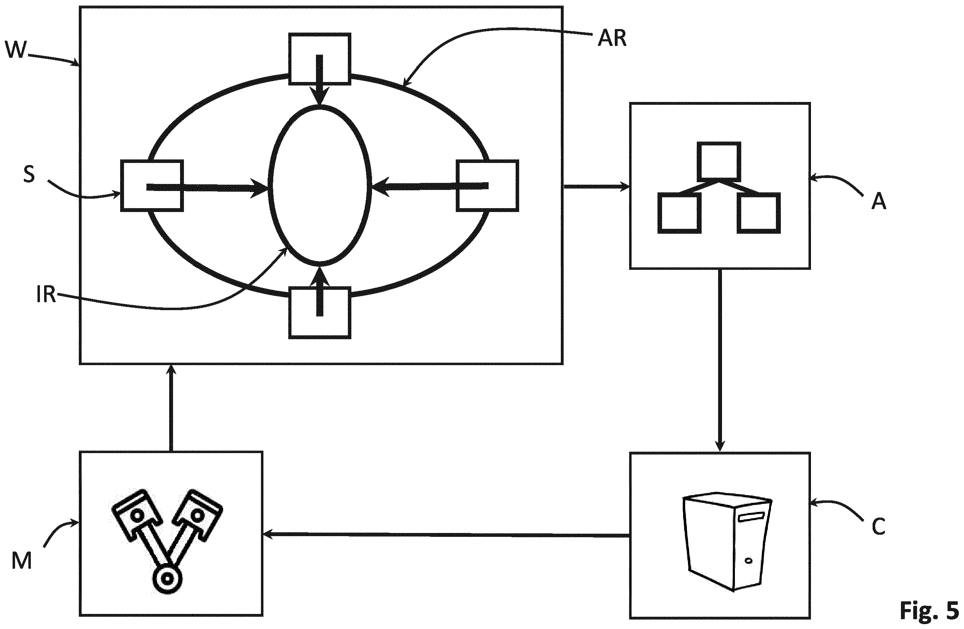

In Fig. 5 ist die erfindungsgemäße Anordnung zur Durchführung des erfindungsgemäßen Verfahrens gezeigt. Diese umfasst ein die Lagerringe IR, AR aufweisendes angetriebenes Wälzlager (W), eine Sensorik zur Ermittlung der Radialverformung (S), welche Sensorik an eine Auswerteeinheit (A) angeschlossen ist. Diese Auswerteeinheit (A) ist mit einer Steuereinheit (C) verbunden.

### Bezugszeichenliste

- 1: Ermittlung der Radialverformung
- 2: Vergleich der Radialverformung mit Grenzwert
- 3: Reduktion der Antriebsleistung
- 4: kein Signal zur Reduktion der Motorleistung
- 5: Bestätigungsanfrage
- 6: Detektion eines Wassereintritts

- IR: Innenring
- AR: Außenring
- UIR: ursprünglichen Form des Innenrings
- W: angetriebenes Wälzlager
- S: Abstandssensor
- A: Auswerteeinheit
- C: Steuerungseinheit
- M: Antriebseinheit

## Patentansprüche

1. Verfahren zur Begrenzung der Ovalisierung und/oder der überlagerten Verkippung eines eine Antriebseinheit (M) lagernden Wälzlagers, mit mindestens zwei zueinander verdrehbar angeordneten Lagerringen (IR, AR), die mindestens eine Reihe von Wälzkörpern in einem Lagerinnenraum einschließen und die durch einen Ringspalt voneinander beabstandet sind, wobei die Antriebseinheit (M) derart angeordnet ist, dass auf die Lagerringe (IR, AR) wirkende Radialkräfte von einer der Antriebseinheit (M) als Motorleistung zugeführten Antriebsleistung abhängig sind, umfassend die folgenden Schritte:
- Ermittlung einer im Betrieb der Antriebseinheit (M) auftretenden Radialverformung des Ringspaltes zwischen den Lagerringen (IR, AR) mittels mindestens zweier Abstandssensoren (S) (1),
- Vergleichen der ermittelten Radialverformung mit einem vorgebbaren Grenzwert in einer Auswerteeinheit (A) (2) und
- Reduzieren der der Antriebseinheit (M) zugeführten Motorleistung mittels einer mit den Abstandssensoren (S) verbundenen Steuereinheit (C) der Antriebseinheit, wenn die Radialverformung den vorgebbaren Grenzwert übersteigt (3).

2. Verfahren nach Anspruch 1, **dadurch gekennzeichnet, dass** bei einer Überschreitung des Grenzwertes der Radialverformung vor der Reduzierung der Motorleistung eine bedienerseitige Bestätigung angefordert wird (5).

3. Verfahren nach Anspruch 2, **dadurch gekennzeichnet, dass** die Motorleistung nach Ablauf einer vordefinierten Zeitspanne für die Bestätigung auch bei ausbleibender Bestätigung reduziert wird.

4. Verfahren nach einem der Ansprüche 1 bis 3, **dadurch gekennzeichnet, dass** das Verfahren mit mindestens vier an dem Ringspalt umfänglich verteilt angeordneten, die Radialverformung ermittelnden Abstandssensoren (S) durchgeführt wird.

5. Verfahren nach einem der Ansprüche 1 bis 4, **dadurch gekennzeichnet, dass** der Grenzwert auf Basis einer FEM-Berechnung mit Blick auf das Dichtungsfedern des Wälzlagers ermittelt werden.

6. Verfahren nach einem der Ansprüche 1 bis 5, **dadurch gekennzeichnet, dass** die Motorleistung der Antriebseinheit bei Überschreiten des Grenzwertes nur dann reduziert wird, wenn zusätzlich durch einen Wassersensor ein Wassereintritt in das Wälzlager detektiert wird (6).

7. Verfahren nach einem der Ansprüche 1 bis 6, **dadurch gekennzeichnet, dass** die Antriebseinheit ein Ruderpropeller eines Wasserfahrzeugs ist.

8. Steuerungsvorrichtung zur Begrenzung der Ovalisierung und/oder der überlagerten Verkippung eines eine Antriebseinheit (M) lagernden Wälzlagers (W) umfassend die Antriebseinheit (M) , das die Antriebseinheit (M) lagernde Wälzlager mit mindestens zwei zueinander verdrehbar angeordneten Lagerringen (IR, AR), die mindestens eine Reihe von Wälzkörpern in einem Lagerinnenraum einschließen und die durch einen Ringspalt voneinander beabstandet sind, wobei die Antriebseinheit (M) derart angeordnet ist, dass auf die Lagerringe (IR, AR) wirkende Radialkräfte von einer der Antriebseinheit (M) als Motorleistung zugeführten Antriebsleistung abhängig sind, und eine Steuereinheit (C) zur Steuerung der Antriebsleistung, **dadurch gekennzeichnet, dass** die Steuerungsvorrichtung ferner mindestens zwei mit der Steuereinheit (C) verbundene Abstandssensoren (S) zur Ermittlung einer Radialverformung des Ringspaltes und eine an die Steuereinheit (C) und die Abstandssensoren (S) angeschlossene Auswerteeinheit (A) zum Vergleichen der ermittelten Radialverformung mit einem vorgebbaren Grenzwert umfasst und die Steuereinheit (C) dazu ausgebildet ist, die Motorleistung zu reduzieren, wenn die Radialverformung des Ringspalts den Grenzwert übersteigt.

9. Steuerungsvorrichtung nach Anspruch 8, **dadurch gekennzeichnet, dass** das Wälzlager einen Durchmesser aufweist, der größer ist als 50 cm.

10. Steuerungsvorrichtung nach einem der Ansprüche 8 oder 9, **dadurch gekennzeichnet, dass** die Antriebseinheit ein Ruderpropeller eines Wasserfahrzeugs ist.

11. Steuerungsvorrichtung nach einem der Ansprüche 8 bis 10, **dadurch gekennzeichnet, dass** die Steuerungsvorrichtung ferner einen mit der Steuereinheit verbundenen, in dem Lagerinnenraum angeordneten Wassersensor umfasst.

12. Steuerungsvorrichtung nach einem der Ansprüche 8 bis 11, **dadurch gekennzeichnet, dass** die Steuerungsvorrichtung dazu ausgebildet ist, das Verfahren nach einem der Ansprüche 1 bis 6 auszuführen.

13. Steuerungsvorrichtung nach einem der Ansprüche 8 bis 12, **dadurch gekennzeichnet, dass** der Abstandsensor eine Sender- und Empfänderspule umfasst und die Messung der Radialverfomung auf Grundlage der Wirbelstromprüfung erfolgt.

## Claims

1. Method for limiting the ovalization and/or the superimposed tilting of a rolling bearing supporting a drive unit (M), having at least two bearing rings (IR, AR) arranged such that they can rotate relative to each other, which enclose at least one row of rolling elements in a bearing interior and which are spaced apart from each other by an annular gap, wherein the drive unit (M) is arranged in such a way that radial forces acting on the bearing rings (IR, AR) depend on a drive power supplied to the drive unit (M) as motor power, comprising the following steps:
- determining a radial deformation of the annular gap between the bearing rings (IR, AR) occurring during the operation of the drive unit (M), by means of at least two distance sensors (S) (1),
- comparing the determined radial deformation with a predefinable limiting value in an evaluation unit (A) (2) and
- reducing the motor power supplied to the drive unit (M) by means of a control unit (C) of the drive unit which is connected to the distance sensors (S), if the radial deformation exceeds the predefinable limiting value (3).

2. Method according to Claim 1, **characterized in that** if the limiting value of the radial deformation is exceeded, a confirmation by an operator is requested before the reduction in the motor power (5).

3. Method according to Claim 2, **characterized in that** even if there is no confirmation, the motor power is reduced after the expiry of a predefined time interval for the confirmation.

4. Method according to one of Claims 1 to 3, **characterized in that** the method is carried out with at least four distance sensors (S) distributed circumferentially around the annular gap and determining the radial deformation.

5. Method according to one of Claims 1 to 4, **characterized in that** the limiting value is determined on the basis of an FEM calculation with regard to the deflection of the sealings of the rolling bearing.

6. Method according to one of Claims 1 to 5, **characterized in that** if the limiting value is exceeded, the motor power of the drive unit is reduced only if an ingress of water into the rolling bearing is additionally detected by a water sensor (6).

7. Method according to one of Claims 1 to 6, **characterized in that** the drive unit is a rudder propeller of a watercraft.

8. Control device for limiting the ovalization and/or the superimposed tilting of a rolling bearing (W) supporting a drive unit (M), comprising the drive unit (M), the rolling bearing supporting the drive unit (M) and having at least two bearing rings (IR, AR) arranged such that they can rotate relative to each other, which enclose at least one row of rolling elements in a bearing interior and which are spaced apart from each other by an annular gap, wherein the drive unit (M) is arranged in such a way that radial forces acting on the bearing rings (IR, AR) depend on a drive power supplied to the drive unit (M) as motor power, and comprising a control unit (C) for controlling the drive power, **characterized in that** the control device further comprises at least two distance sensors (S) connected to the control unit (C) for determining a radial deformation of the annular gap, and an evaluation unit (A) connected to the control unit (C) and the distance sensors (S) for comparing the determined radial deformation with a predefinable limiting value, and the control unit (C) is designed to reduce the motor power if the radial deformation of the annular gap exceeds the limiting value.

9. Control device according to Claim 8, **characterized in that** the rolling bearing has a diameter which is larger than 50 cm.

10. Control device according to either of Claims 8 and 9, **characterized in that** the drive unit is a rudder propeller of a watercraft.

11. Control device according to one of Claims 8 to 10, **characterized in that** the control device further comprises a water sensor connected to the control unit and arranged in the bearing interior.

12. Control device according to one of Claims 8 to 11, **characterized in that** the control device is designed to carry out the method according to one of Claims 1 to 6.

13. Control device according to one of Claims 8 to 12, **characterized in that** the distance sensor comprises a transmitting and receiving coil, and the measurement of the radial deformation is carried out on the basis of the eddy current test.

## Revendications

1. Procédé de limitation de l'ovalisation et/ou du basculement superposé d'un palier à rouleaux supportant une unité d'entraînement (M) et comprenant au moins deux bagues de palier (IR, AR) qui sont disposées de manière à pouvoir tourner l'une par rapport à l'autre, qui renferment au moins une rangée d'éléments roulants dans un espace intérieur de palier et qui sont espacées l'une de l'autre par un espace annulaire, l'unité d'entraînement (M) étant disposée de manière à ce que des forces radiales agissant sur les bagues de palier (IR, AR) dépendent d'une puissance d'entraînement fournie comme puissance motrice à l'unité d'entraînement (M), ledit procédé comprenant les étapes suivantes :
- déterminer une déformation radiale, se produisant pendant le fonctionnement de l'unité d'entraînement (M), de l'espace annulaire entre les bagues de palier (IR, AR) à l'aide d'au moins deux capteurs de distance (S) (1),
- comparer la déformation radiale déterminée à une valeur limite spécifiable dans une unité d'évaluation (A) (2) et
- réduire la puissance motrice, fournie à l'unité d'entraînement (M), au moyen d'une unité de commande, reliée aux capteurs de distance (S), de l'unité d'entraînement (C) si la déformation radiale dépasse la valeur limite spécifiable (3).

2. Procédé selon la revendication 1, **caractérisé en ce que**, si la valeur limite de la déformation radiale est dépassée avant que la puissance motrice ne soit réduite, une confirmation de la part de l'opérateur est demandée (5).

3. Procédé selon la revendication 2, **caractérisé en ce que** la puissance motrice est réduite après un laps de temps prédéfini pour la confirmation même s'il n'y a pas de confirmation.

4. Procédé selon l'une des revendications 1 à 3, **caractérisé en ce que** le procédé est mis en œuvre avec au moins quatre capteurs de distance (S) qui sont répartis circonférentiellement à l'espace annulaire et qui déterminent la déformation radiale.

5. Procédé selon l'une des revendications 1 à 4, **caractérisé en ce que** la valeur limite est déterminée sur la base d'un calcul par FEM avec prise en compte de l'élasticité d'étanchéité du palier à rouleaux.

6. Procédé selon l'une des revendications 1 à 5, **caractérisé en ce que**, lorsque la valeur limite est dépassée, la puissance motrice de l'unité d'entraînement n'est réduite que si une entrée d'eau dans le palier à rouleaux est également détectée par un capteur d'eau (6).

7. Procédé selon l'une des revendications 1 à 6, **caractérisé en ce que** l'unité d'entraînement est une hélice de gouvernail d'un engin nautique.

8. Dispositif de commande de la limitation de l'ovalisation et/ou du basculement superposé d'un palier à rouleaux (W) supportant une unité d'entraînement (M), ledit dispositif de commande comprenant l'unité d'entraînement (M), le palier à rouleaux qui supporte l'unité d'entraînement (M) et qui comprend au moins deux bagues de palier (IR, AR) qui sont disposées de manière à pouvoir tourner l'une par rapport à l'autre, qui renferment au moins une rangée d'éléments roulants dans un espace intérieur de palier et qui sont espacées l'une de l'autre par un espace annulaire, l'unité d'entraînement (M) étant disposée de manière à ce que les forces radiales agissant sur les bagues de palier (IR, AR) dépendent d'une puissance d'entraînement fournie comme puissance motrice à l'unité d'entraînement (M), et une unité de commande (C) destinée à commander la puissance d'entraînement, **caractérisé en ce que** le dispositif de commande comprend également au moins deux capteurs de distance (S) reliés à l'unité de commande (C) et destinés à déterminer une déformation radiale de l'espace annulaire et une unité d'évaluation (A) raccordée à la l'unité de commande (C) et aux capteurs de distance (S) et destinée à comparer la déformation radiale déterminée à une valeur limite spécifiable et l'unité de commande (C) est conçue pour réduire la puissance motrice lorsque la déformation radiale de l'espace annulaire dépasse la valeur limite.

9. Dispositif de commande selon la revendication 8, **caractérisé en ce que** le palier à rouleaux a un diamètre supérieur à 50 cm.

10. Dispositif de commande selon l'une des revendications 8 et 9, **caractérisé en ce que** l'unité d'entraînement est une hélice de gouvernail d'un engin nautique.

11. Dispositif de commande selon l'une des revendications 8 à 10, **caractérisé en ce que** le dispositif de commande comprend en outre un capteur d'eau relié à l'unité de commande et disposé dans l'espace intérieur de palier.

12. Dispositif de commande selon l'une des revendications 8 à 11, **caractérisé en ce que** le dispositif de commande est conçu pour mettre en œuvre le procédé selon l'une des revendications 1 à 6.

13. Dispositif de commande selon l'une des revendications 8 à 12, **caractérisé en ce que** le capteur de distance comprend une bobine émettrice et réceptrice et la mesure de la déformation radiale est basée sur le test par courants de Foucault.
